Europäisches Patentamt

European Patent Office

Office européen des brevets

(19)

(11) **EP 1 197 416 A2**

(12) ## EUROPÄISCHE PATENTANMELDUNG

(43) Veröffentlichungstag:
**17.04.2002 Patentblatt 2002/16**

(51) Int Cl.⁷: **B61K 9/04**, G01H 1/00

(21) Anmeldenummer: **01890292.4**

(22) Anmeldetag: **11.10.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **12.10.2000 AT 17502000**

(71) Anmelder: **Siemens SGP Verkehrstechnik GmbH
1110 Wien (AT)**

(72) Erfinder:
• **Schmeja, Michael
8020 Graz (AT)**

• **Einzmann, Klaus
91350 Gremsdorf-Buch (DE)**
• **Wiemerslage, Dieter
91093 Untermembach (DE)**

(74) Vertreter: **Matschnig, Franz, Dipl.-Ing.
Patentanwalt,
Siebensterngasse 54,
Postfach 252
1071 Wien (AT)**

(54) **Verfahren und Vorrichtung zur Erkennung eines heissgelaufenen Wälzlagers eines Schienenfahrzeuges**

(57) Ein Verfahren zur Erkennung eines heißgelaufenen Wälzlagers (WLA) eines in einem Achslager (AXL) drehbar um seine Achse (AXE) gelagerten Rades (RAD) eines Schienenfahrzeuges, wobei im Bereich des Achslagers (AXL) zumindest ein Beschleunigungssignal (BSI) erzeugt wird, aus welchem ein für den thermischen Zustand des Wälzlagers charakteristischer Kennwert (KEN) berechnet wird, wobei dieser Kennwert (KEN) mit einem Sollwert (SOL) verglichen und bei Überschreiten einer vorgebbaren Abweichung des Kennwertes (KEN) von dem Sollwert (SOL) ein Hinweissignals (ALA) erzeugt wird.

Fig. 4

EP 1 197 416 A2

## Beschreibung

Die Erfindung betrifft ein Verfahren zur Erkennung eines heißgelaufenen Wälzlagers eines in einem Achslager drehbar um seine Achse gelagerten Rades eines Schienenfahrzeuges.

Weiters betrifft die Erfindung eine Vorrichtung zur Erkennung eines heißgelaufenen Wälzlagers zumindest eines in einem Achslager drehbar gelagerten Rades eines Schienenfahrzeuges.

Bei Schienenfahrzeugen ist üblicherweise zwischen der Radachse eines Rades und einem Achslager, in welchem die Radachse gelagert ist, ein Wälzlager zur Reibungsminimierung vorgesehen. Bei einem Heißlaufen des Wälzlagers können durch die entstehende Hitze Befestigungsteile schmelzen und das Rad seine Führung verlieren. Im praktischen Betrieb eines Schienenfahrzeuges stellt ein heißgelaufenes Wälzlager daher ein großes Sicherheitsrisiko dar.

Üblicherweise wird bei Hochgeschwindigkeitszügen die Temperatur der Wälzlager durch stationär entlang von Fahrstrecken angebrachte Heißläufer-Ortungsanlagen und/oder durch fahrwerkseitig angebrachte Temperatursensoren überwacht. Nachteilig an den bekannten Vorrichtungen und Verfahren ist der hohe Wartungsaufwand und die mit ihnen verbundenen hohen Kosten.

Die US 5 433 111 A beschreibt eine Vorrichtung und ein Verfahren zur Erkennung von Radschäden eines Schienenfahrzeuges. Die bekannte Vorrichtung weist eine Messeinheit zur Ermittlung der Achsrotation eines Radsatzes und einen Bewegungssensor, beispielsweise einen Beschleunigungssensor, zur Erfassung von Bewegungen vertikal zur Schienenebene. Bei schadhaften Gleisen wird pro Beschleunigungssensor ein entsprechendes Signal erzeugt. Tritt ein Radschaden auf, so wird mit der Periode der Achsrotation ein Beschleunigungssignal in vertikaler Richtung erzeugt, welches einen Rückschluss darauf zulässt, ob ein Radschaden vorliegt.

Die DE 198 26 422 A1 bezieht sich auf ein kombiniertes Sensorsystem zur kontinuierlichen Kontrolle der Radsätze, bei welchem Radlagerschäden mittels Körperschallsensoren ermittelt werden. Hierzu werden Lagergeräusche eines Radlagers mit den Lagergeräuschen eines neuen Radlagers verglichen.

Die US 5 150 618 A beschreibt eine Vorrichtung zur Detektion eines Lagerschadens, wobei an einer Gleisanlage eine Detektionszone mit einem Detektor vorgesehen ist. Bei Vorbeifahren eines Schienenfahrzeuges können mittels akustischer Sensoren Lagergeräusche in elektrische Signale umgewandelt werden, welche in einer Auswerteeinheit auf das Vorhandensein bestimmter Frequenzen untersucht werden.

Es ist daher eine Aufgabe der Erfindung, einen Weg zu schaffen, der es ermöglicht einfach und kostengünstig ein Heißlaufen der Wälzlager zu erkennen.

Diese Aufgabe wird mit einem Verfahren der eingangs genannten Art erfindungsgemäß gelöst, bei welchem im Bereich des Achslagers zumindest ein Beschleunigungssignal erzeugt wird, aus welchem ein für den thermischen Zustand des Wälzlagers charakteristischer Kennwert berechnet wird, wobei dieser Kennwert mit einem Sollwert verglichen und bei Überschreiten einer vorgebbaren Abweichung des Kennwertes von dem Sollwert ein Hinweissignal erzeugt wird.

Diese Lösung gestattet es, den thermischen Zustand eines Wälzlagers auch während des Betriebes permanent zu überprüfen und ein Heißlaufen des Lagers zu erkennen.

Ein weiterer Vorteil der Erfindung besteht darin, im Fall eines während einer Fahrt ermittelten Heißlaufens eines Wälzlagers durch Erzeugung eines Hinweissignals das Ergreifen von Maßnahmen zu ermöglichen, um einen Unfall zu verhindern, beispielsweise durch Verringerung der Fahrtgeschwindigkeit.

Zur Ermittlung des Kennwertes zur Charakterisierung des thermischen Wälzlagerzustandes kann eine Spektralverteilung des zumindest einen Beschleunigungssignals berechnet werden.

Im Rahmen der Kennwertbildung wird vorteilhafterweise die Drehfrequenz der Achse des Rades ermittelt.

In einer vorteilhaften Variante der Erfindung wird im Rahmen der Kennwertbildung eine vorgebbare Anzahl von Innenring-Überrollharmonischen berechnet.

Eine andere günstige Variante der Erfindung sieht vor, dass an den Achslagern zumindest zweier Räder je zumindest ein Beschleunigungssignal erzeugt und aus jedem dieser Signale ein Kennwert ermittelt wird, wobei die beiden Kennwerte miteinander verglichen werden.

Als Kennwert kann auch der Crestfaktor des zumindest einen Beschleunigungssignals berechnet werden.

Gemäß einer weiteren, ebenfalls sehr vorteilhaften Variante der Erfindung kann als Kennwert die Schiefe oder die Wölbung einer Wahrscheinlichkeitsdichtefunktion des Beschleunigungssignals berechnet werden.

Um den thermischen Zustand eines Wälzlagers in Abhängigkeit von seiner Betriebszeit analysieren zu können, kann der Kennwert in einer Kennwertdatenbank abgelegt werden.

Zur Durchführung des erfindungsgemäßen Verfahrens eignet sich im besonderen eine Vorrichtung der eingangs genannten Art, bei welcher in dem Bereich des Achslagers zumindest eines Rades zumindest ein Beschleunigungssensor angeordnet ist, der mit einer Auswerteeinheit in Verbindung steht, die dazu eingerichtet ist, zumindest ein Beschleunigungssignal von dem Beschleunigungssensor zu empfangen und daraus einen Kennwert zur Charakterisierung des thermischen Zustandes des Wälzlagers zu ermitteln und mit einem Sollwert zu vergleichen und bei Überschreiten einer vorgebbaren Abweichung des Kennwertes von dem Sollwert eine Hinweisnachricht zu erzeugen.

Vorteilhafterweise ist die Auswerteeinheit dazu eingerichtet, eine Spektralverteilung des zumindest einen Beschleunigungssignals zu berechnen.

Zur Kennwertermittlung ist die Auswerteeinheit dazu eingerichtet, eine vorgebbare Anzahl von Innenringüberrollharmonischen aus dem zumindest einen Beschleunigungssignal zu berechnen.

Eine vorteilhafte Ausführungsform der Erfindung besteht darin, dass an den Achslagern zumindest zweier Räder je zumindest ein Beschleunigungssensor angeordnet ist, der mit der Auswerteeinheit in Verbindung steht, die dazu eingerichtet ist, zumindest ein Beschleunigungssignal von dem Beschleunigungssensor zu empfangen und daraus einen Kennwert zur Charakterisierung des thermischen Zustandes des Wälzlagers zu ermitteln, und die zumindest zwei Kennwerte miteinander zu vergleichen.

Die Auswerteeinheit kann weiters dazu eingerichtet sein, als Kennwert den Crestfaktor des zumindest einen Beschleunigungssignals zu berechnen.

Nach einer weiteren günstigen Variante der Erfindung kann die Auswerteeinheit dazu eingerichtet sein, als Kennwert die Schiefe einer Wahrscheinlichkeitsdichtefunktion des Beschleunigungssignals zu berechnen.

Darüber hinaus kann die Auswerteeinheit dazu eingereichtet sein, als Kennwert die Wölbung einer Wahrscheinlichkeitsdichtefunktion des Beschleunigungssignals zu berechnen.

Eine günstige Variante der Erfindung besteht darin, dass eine Kennwertdatenbank zur Speicherung des Kennwertes vorgesehen ist.

Um das Hinweissignal auszugeben, ist eine Ausgabeeinheit vorgesehen, wobei die Ausgabeeinheit dazu eingerichtet ist, das Hinweissignal in optischer und/oder akustischer Weise auszugeben.

Die Erfindung samt weiteren Vorteilen wird im folgenden anhand einiger nicht einschränkender Ausführungsbeispiele näher erläutert, die in der Zeichnung veranschaulicht sind. In dieser zeigen schematisch:

Fig. 1 in einer Draufsicht auf ein Drehgestell die Anordnung von Beschleunigungssensoren einer erfindungsgemäßen Vorrichtung zur Ermittlung eines heißgelaufenen Wälzlagers,

Fig. 2 einen schematischen Schnitt durch ein Wälzlager eines Rades senkrecht zu seiner Achse,

Fig. 3a einen Ausschnitt aus dem Spektrum eines Beschleunigungssignals eines heißgelaufenen Wälzlagers,

Fig. 3b einen Ausschnitt aus dem Spektrum eines Beschleunigungssignals eines Wälzlagers im Normalzustand;

Fig. 4 ein vereinfachtes Blockschaltbild einer erfindungsgemäßen Vorrichtung im näheren Detail und

Fig. 5 ein Beschleunigungssignal in Abhängigkeit von der Zeit und

Fig. 6 den Bereich VI aus Fig. 5 im näheren Detail.

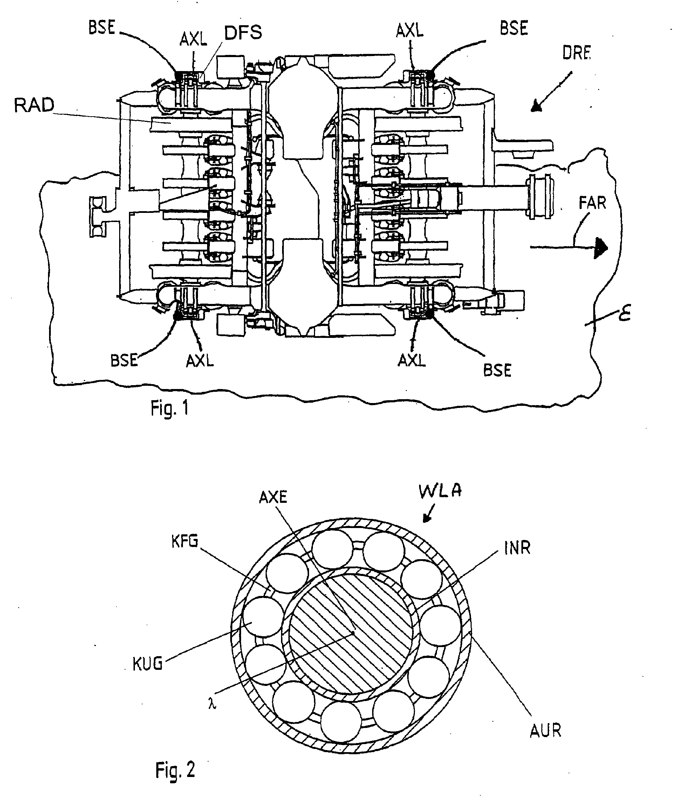

Gemäß Fig. 1 ist zur Erkennung eines heißgelaufenen Wälzlagers WLA, wie es in Fig. 2 dargestellt ist, an jedem Achslager AXL eines Rades des Drehgestells DRE eines Schienenfahrzeuges ein Beschleunigungssensor BSE angeordnet.

Durch die Drehbewegung einer starr mit einem Innenring INR des Wälzlagers WLA verbundenen Radachse AXE wird während der Fahrt des Schienenfahrzeuges eine periodische Bewegung des Innenringes gegenüber einem Käfig KFG des Wälzlagers WLA aufrecht erhalten. Aufgrund dieser Relativbewegung des Innenringes INR gegenüber dem Käfig KFG wird eine Schwingung in dem Wälzlager WLA hervorgerufen, die ihrerseits in dem mit dem Wälzlager verbundenen Achslager AXL Schwingungen induziert. Diese Schwingungen sind in Form lokaler Beschleunigungsschwankungen an dem Achslager AXL messbar und stellen ein Maß für das Heißlaufen des Wälzlagers dar.

Ein wesentliches Element der vorliegenden Erfindung ist die Erkenntnis, dass besonders repräsentative Messergebnisse erzielt werden können, wenn die Wirkungsrichtung der Beschleunigungssensoren BSE im wesentlichen normal zur Schienenebene ε oder parallel zur Fahrtrichtung des Schienenfahrzeuges verläuft. In der Zeichnung ist die Fahrtrichtung FAR bzw. die Wirkungsrichtung der Beschleunigungssensoren BSE mit einem Pfeil dargestellt.

Unter Wirkungsrichtung eines Beschleunigungssensors BSE wird in diesem Dokument die Richtung verstanden, in welcher der Sensor Beschleunigungskräfte aufnehmen und Signale liefern kann.

Die Beschleunigungssensoren BSE können beispielsweise als piezoelektrische Sensoren ausgebildet sein, bei welchen in bekannter Weise ein piezoelektrischer Kristall zwischen zwei parallel zueinander verlaufenden Kondensatorplatten angeordnet ist. Findet diese Art von Sensoren Verwendung so kann man dadurch, dass die beiden Kondensatorplatten im wesentlichen normal zur Fahrtrichtung des Schienenfahrzeuges oder parallel zur Schienenebene ε verlaufen, die Wirkrichtung der Beschleunigungssensoren BSE mit der Fahrtrichtung bzw. mit einer Richtung normal zu dieser zur Übereinstimmung bringen. Selbstverständlich können auch andere bekannte Beschleunigungssensoren, die auf anderen Mechanismen beruhen, verwendet werden.

In der weiteren Betrachtung in diesem Dokument wird auf eine Anordnung der Beschleunigungssensoren Bezug genommen, bei welcher die Wirkrichtung der Sensoren normal zur Schienenebene ε verläuft.

Das Wälzlager WLA gemäß Fig. 2 weist einen Außenring AUR und einen Innenring INR auf, zwischen denen Wälzkörper KUG angeordnet sind, die in einem Käfig KFG drehbar gelagert sind. Der Innenring INR ist starr mit der Radachse AXE verbunden und rotiert mit ihrer Rollfrequenz um die Längssymmetriegerade λ des Wälzlagers WLA. Aufgrund der Reibung zwischen dem Innenring INR und den Wälzkörpern KUG folgt der Käfig KFG der Rotationsbewegung des Innenringes INR. Aus den geometrischen Gegebenheiten des Wälzlagers WLA lassen sich bekannterweise die Überrollfrequenzen der Wälzkörper KUG über den Innenring INR, die sogenannten Innenringüberrollharmonischen, in Abhängigkeit von der Rotationsgeschwindigkeit der Radachse AXE berechnen. Den Innenringharmonischen, die wesentlich von der Rotationsfrequenz des Käfigs KFG abhängen, kommt, wie im folgenden beschrieben, für die Erkennung eines heißgelaufenen Wälzlagers WLA eine große Bedeutung zu.

Unter dem Begriff Harmonische werden in diesem Dokument Spektrallinien verstanden, deren Frequenzen zu einer gemeinsamen Grundfrequenz ein ganzzahliges Verhältnis aufweisen. Dies lässt sich insbesondere durch eine Fouriertransformation von periodischen, nicht sinusförmigen Signalen darstellen. Die Grundharmonische ist dabei die Harmonische mit der niedrigsten Frequenz, welche dem Kehrwert der Periodendauer eines solchen Signals entspricht.

Grundsätzlich wird in der vorliegenden Betrachtung zwischen kinematischen Frequenzen-wie der Innenringüberrollharmonischen und Strukturfrequenzen - den Eigenschwingungen eines Bauteils - unterschieden.

Während die kinematischen Frequenzen von der Rotationsgeschwindigkeit der Radachse abhängen, sind die Strukturfrequenzen geschwindigkeitsunabhängig und stellen ein Charakteristikum des jeweiligen Bauteils - beispielsweise des Wälzlagers- dar.

Die Überrollfrequenzen des Innenringes INR geben an, wie oft eine Stelle der Laufbahn pro Zeiteinheit von einem Wälzkörper KUG überrollt wird. Ist eine Stelle der Laufbahn des Innenringes INR schadhaft so ergibt sich daraus eine Stoßfolge mit der Überrollfrequenz-siehe dazu auch "Wälzlagerdiagnostik für Maschinen und Anlagen" von Prof. Dr. sc. techn. Adolf Sturm et. al. 1. Auflage VEB Verlag Technik, Berlin, 1985, Kap. 2, S. 26- 43. Die von der soeben erwähnten Stoßfolge induzierte Schwingung wird in diesem Dokument als Innenringüberrollschwingung bezeichnet.

Aus noch nicht vollständig geklärten Gründen, die noch Gegenstand weiterer Untersuchungen sind, stellt die Grundschwingung bzw. Grundharmonische der Innenringüberrollschwingung ein Charakteristikum für ein heißgelaufenes Wälzlager. Die Kenntnis der Grundschwingung bzw. der Grundharmonischen der Innenringüberrollschwingung lässt somit einen Rückschluss auf den thermischen Zustand des Wälzlagers zu.

Anhand der gemessenen Drehfrequenz der Achse, die starr mit dem Innenring verbunden ist, erfolgt eine Berechnung der theoretischen Lage der Grundharmonischen der Innenringüberrollschwingung in einem Amplitudenspektrum eines von dem Beschleunigungssensor BSE erzeugten Beschleunigungssignals BSI. In einem vorgebbaren Bereich um die theoretische Position der Innenringgrundharmonischen wird dann in dem Amplitudenspektrum des Beschleunigungssignals BSI nach dem Maximum gesucht. Zur Bestimmung der Achsdrehfrequenz kann beispielsweise an der Radachse ein Drehfrequenzsensor DFS angeordnet sein.

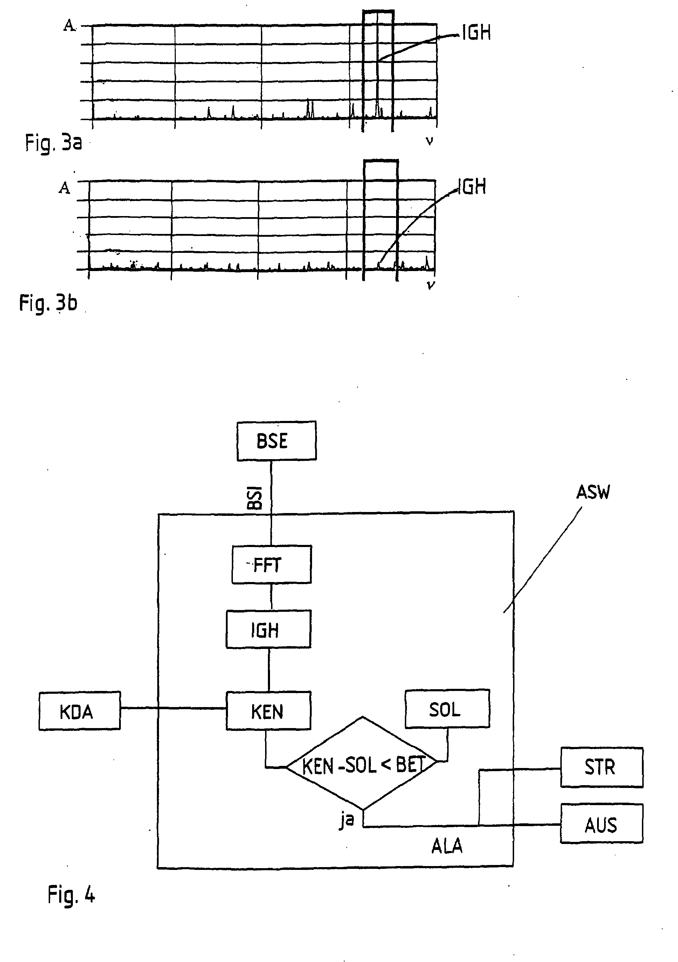

Nach Fig. 3a tritt die Grundharmonische IGH der Innenringüberrollharmonischen bei einem heißgelaufenen Wälzlager als Bereichsdominante, d. h. als die Frequenz ν mit der höchsten Amplitude A, des auf die oben beschriebene Art bestimmten Bereiches in der Spektraldarstellung des Beschleunigungssignals BSI auf. Im Gegensatz dazu treten gemäß Fig. 3b bei einem Wälzlager WLA im Normalzustand die Grundharmonische IGH der Innenringüberrollharmonischen nicht als Bereichsdominante auf.

Gemäß Fig. 4 wird das von dem Beschleunigungssensor BSE aufgenommene Beschleunigungssignal BSI an eine Auswerteeinheit ASW übermittelt. Die Übertragung des Beschleunigungssignals BSI von den Beschleunigungssensoren BSE an die Auswerteeinheit ASW kann über elektrische Leitungen, Glasfaserkabel oder drahtlos erfolgen.

In der Auswerteeinheit ASW können innerhalb eines vorgebbaren Zeitfensters gelegene Signalwerte des Beschleunigungssignals BSI einer Fouriertransformation FFT unterworfen.

Schaltungen und Verfahren zur Durchführung einer Fouriertransformation, insbesondere einer Fast Fouriertransformation sind bekannt und beispielsweise in der EP 402 145 und in "Sprachverarbeitung" von B. Eppinger und E. Herter; Hanser Verlag München Wien 1993 S. 68-71 beschrieben.

In dem erhaltenen Spektrum kann der Bereich, in dem die Grundharmonische der Innenringüberrollharmonischen IGH bei der gemessenen Drehfrequenz liegt, untersucht werden. Tritt in dem betrachteten Bereich eine überhöhte Grundharmonische der Innenringüberrollharmonischen auf, so kann daraus, wie bereits oben erwähnt, auf ein Heißlaufen des Wälzlagers geschlossen werden.

Die Amplitudenhöhe der Grundharmonischen stellt dabei den Kennwert KEN zur Bestimmung des thermischen Zustandes des Wälzlagers dar. Überschreitet dieser Kennwert einen Sollwert SOL um einen vorgebbaren Betrag BET, so wird ein Hinweissignal ALA auf einer Ausgabeeinheit AUS, beispielsweise ein Display auf dem Armaturenbrett eines Triebwagens, generiert. Zur Erhöhung der Betriebssicherheit des Schienenfahrzeuges kann bei Überschreiten des Sollwertes SOL von einer eigens hierfür vorgesehenen Steuerung STR eine Notbremsung eingeleitet werden.

Als Sollwert kann auch ein oder mehrere auf die oben beschriebene Art ermittelter Kennwert(e), der (die) anderen Wälzlagern zugeordnet ist (sind) herangezogen werden.

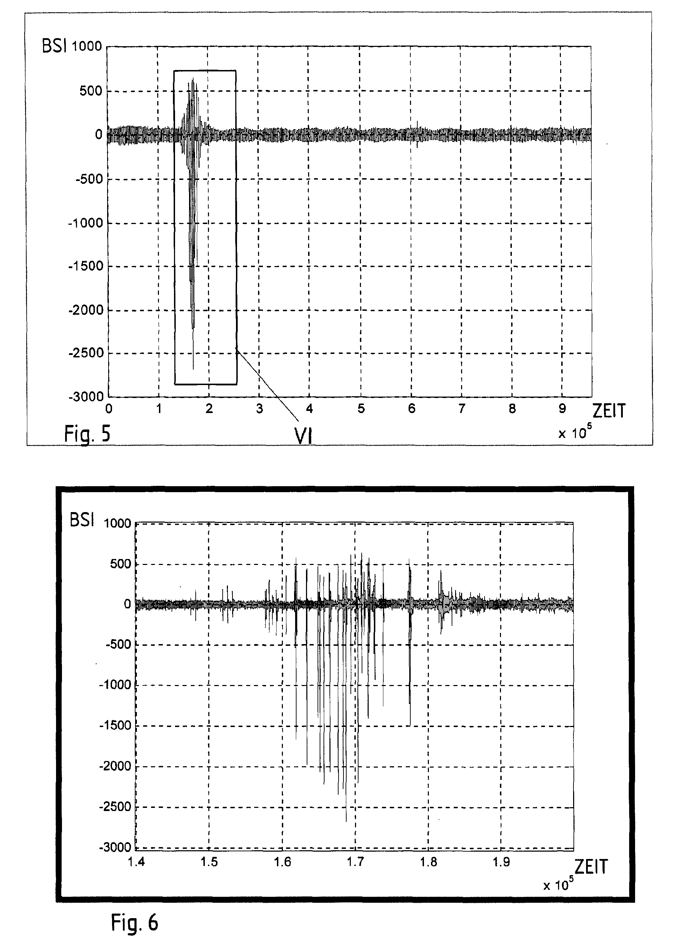

Gemäß Fig. 5 besteht eine weitere Möglichkeit einen für den thermischen Zustand des Wälzlagers charakteristischen Kennwert KEN zu bilden darin, dass der Kennwert KEN der Crestfaktor C des Beschleunigungssignals BSI ist. Der Crestfaktor C des Beschleunigungs-signals BSI gibt das Verhältnis von Scheitel- zu Effektivwert des Beschleunigungssignals an. Enthält das Signal BSI einzelne impulsförmige Komponenten, die einen hohen Scheitelwert bei geringer Signalleistung ergeben, verursacht dies einen hohen Wert des Crestfaktors C. Der Crestfaktor C eines Signals BSI kann allgemein nach folgender Formel berechnet werden:

$$C = \frac{x_{MAX}}{x_{EFF}} = \frac{|x(t)|_{MAX}}{x_{EFF}}$$

Aus der soeben genannten Formel folgt, dass die Kennwertbildung aus dem Beschleunigungssignal BSI im Zeitbereich erfolgen kann. Das hat den Vorteil, dass in diesem Fall keine Signalvorverarbeitung, beispielsweise in Form einer Fouriertransformation notwendig ist. Der Crestfaktor C liegt bei typischen Achslagerbeschleunigungen im Normalfall zwischen 5 und 10. Ein in diesem Bereich liegender Kennwert KEN entspricht einer Normaltemperatur bzw. Solltemperatur des Radlagers. Auch für den Fall, dass Rad- oder Lagerschäden auftreten, liegt der Crestfaktor C in diesem Bereich.

Bei einem heißgelaufenen Radlager kann es infolge der Überhitzung zu einem Bruch des die Rollen fassenden Käfigs kommen. Dieser Käfigbruch ist mittels der Berechnung des Crestfaktors C eindeutig erkennbar.

Der Ausschnitt des Beschleunigungssignals BSI in Fig. 6 entspricht beispielsweise einem Zeitraum von 2 Sekunden. In diesem Zeitraum ist es infolge einer Überhitzung des Radlagers zu einem Käfigbruch gekommen. Dieser Signalausschnitt besitzt die Werte $BSI_{MAX} = 2685 m/s^2$, $BSI_{EFF} = 72,2 \ m/s^2$. Dies entspricht einem Crestfaktor C von 37, 2. Anhand des so berechneten Kennwertes KEN kann das betreffende Radlager als überhitzt (thermisch zerstört) klassifiziert werden.

Da ein Ansteigen des Crestfaktors ausschließlich von einer Temperaturerhöhung des Radlagers verursacht wird, lässt sich somit anhand der Crestfaktorbestimmung ein Heißlaufen des Radlagers eindeutig bestimmen und von anderen Bauteilschäden, wie beispielsweise Laufradschäden, welche sogar die stärksten Beschleunigungssignale BSI verursachen, eindeutig unterscheiden.

Eine andere Möglichkeit, einen für den thermischen Zustand des Radlagers charakteristischen Zustand zu berechnen, besteht darin, die Schiefe $\gamma_1$ bzw. die Wölbung $\gamma_2$ der Wahrscheinlichkeitsdichte des Beschleunigungssignals zu berechnen. D. h. als Kennwert KEN wird das Zentralmoment 3. bzw. 4. Ordnung der Wahrscheinlichkeitsdichte des Beschleunigungssignals BSI berechnet.

Wird als Kennwert KEN die Schiefe $\gamma_1$ berechnet, so kann dies nach folgender Formel erfolgen:

$$\text{KEN} = \ \gamma_1 = \frac{1}{N} \sum_{k=1}^{N} \left( \frac{x_k - \bar{x}}{\sigma} \right)^3 ,$$

wobei $\bar{x}$ den Mittelwert des Beschleunigungssignals BSI and $\sigma$ die Quadratwurzel aus der Varianz der Verteilungsfunktion darstellt.

In der Regel erwartet man am Achslager eine normalverteilte Amplitudenhäufigkeit, die als symmetrische Dichtefunktion eine Schiefe Null besitzt. Das in Fig. 6 vorliegende Beschleunigungssignal BSI weist hingegen eine deutliche Asymmetrie zu negativen Beschleunigungen hin auf, was in dem vorliegenden Fall einer Schiefe bzw. einem Kennwert von -12,8 entspricht.

Wird hingegen als Kennwert KEN die Wölbung $\gamma_2$ berechnet so kann dies nach folgender Formel erfolgen:

$$\text{KEN} = \gamma_2 = \left[ \frac{1}{N} \sum_{k=1}^{N} \left( \frac{x_k - \bar{x}}{\sigma} \right)^4 \right] - 3$$

Bei typischen Achslagerbeschleunigungen beträgt die Wölbung $\gamma_2$ maximal den Wert 3 (selbst im Fall von Rad- oder Lagerschäden) das vorliegende Beschleunigungssignal SI1 weist hingegen eine Wölbung $\gamma_2$ von 313 auf. Da ein Ansteigen des Wertes der Wölbung $\gamma_2$ bzw. eine Abweichung von dem Wert Null im Fall der Schiefe $\gamma_1$, so wie bei dem oben erwähnten Crestfaktors C ausschließlich von einer Temperaturerhöhung (bis zum Käfigbruch) des Radsatzlagers verursacht wird, lässt sich somit anhand der Berechnung der Schiefe $\gamma_1$ bzw. der Wölbung $\gamma_2$ ein Heißlaufen des Radsatzlagers eindeutig bestimmen und von anderen Bauteilschäden, wie beispielsweise Laufradschäden eindeutig unterscheiden.

Die Berechnung des Kennwertes KEN kann kontinuierlich erfolgen, und beispielsweise für aufeinanderfolgende Ausschnitte (Datenfenster) vorgebbarer Größe des Beschleunigungs-signals BSI durchgeführt werden. Als Datenfenster kann beipielsweise ein Rechteckfenster verwendet werden, wobei auch andere dem Fachmann bekannte Fensterfunktionen verwendet werden können, z.B. Dreieckfenster, Hamming-Fenster, Von-Hann-Fenster, etc .

Um den zeitlichen Verlauf des thermischen Wälzlagerzustandes aufzuzeichnen, wird der Kennwert KEN laufend in einer Kennwertdatenbank KDA abgelegt.

Das oben beschriebene Verfahren kann selbstverständlich unter Verwendung bekannter, entsprechend programmierter Mikroprozessoren online durchgeführt werden. Dem Fachmann sind darüber hinaus zahlreiche Programme bzw. Programmiersprachen bekannt, die sich zur Realisierung des erfindungsgemäßen Verfahrens eignen, beispielsweise Mathematica, Matlab etc.

**Patentansprüche**

1. Verfahren zur Erkennung eines heißgelaufenen Wälzlagers (WLA) eines in einem Achslager (AXL) drehbar um seine Achse (AXE) gelagerten Rades (RAD) eines Schienenfahrzeuges, **dadurch gekennzeichnet, dass** im Bereich des Achslagers (AXL) zumindest ein Beschleunigungssignal (BSI) erzeugt wird, aus welchem ein für den thermischen Zustand des Wälzlagers charakteristischer Kennwert (KEN) berechnet wird, wobei dieser Kennwert (KEN) mit einem Sollwert (SOL) verglichen und bei Überschreiten einer vorgebbaren Abweichung des Kennwertes (KEN) von dem Sollwert (SOL) ein Hinweissignals (ALA) erzeugt wird.

2. Verfahren nach Anspruch 1, **dadurch gekennzeichnet, dass** eine Spektralverteilung des zumindest einen Beschleunigungssignals (BSI) berechnet wird.

3. Verfahren nach einem der Ansprüche 1 oder 2, **dadurch gekennzeichnet, dass** die Drehfrequenz ($\nu_{WELLE}$) der Achse (AXE) des Rades (RAD) ermittelt wird.

4. Verfahren nach einem der Ansprüche 1 bis 3, **dadurch gekennzeichnet, dass** eine vorgebbare Anzahl von Innenring-Überrollharmonischen (IRH) berechnet wird.

5. Verfahren nach einem der Ansprüche 1 bis 4, **dadurch gekennzeichnet, dass** an den Achslagern (AXL) zumindest zweier Räder (RAD) je zumindest ein Beschleunigungssignal (BSI) erzeugt und aus jedem dieser Signale ein Kennwert (KEN) ermittelt wird, wobei die beiden Kennwerte (KEN) miteinander verglichen werden.

6. Verfahren nach Anspruch 1, **dadurch gekennzeichnet, dass** als Kennwert (KEN) ein Crestfaktor (C) des zumindest einen Beschleunigungssignals (BSI) berechnet wird.

7. Verfahren nach Anspruch 1, **dadurch gekennzeichnet, dass** als Kennwert (KEN) die Schiefe ($\gamma_1$) einer Wahrscheinlichkeitsdichtefunktion des Beschleunigungssignals (BSI) berechnet wird.

8. Verfahren nach Anspruch 1, **dadurch gekennzeichnet, dass** als Kennwert (KEN) die Wölbung ($\gamma_2$) einer Wahrscheinlichkeitsdichtefunktion des Beschleunigungssignals (BSI) berechnet wird.

9. Verfahren nach einem der Ansprüche 1 bis 8, **dadurch gekennzeichnet, dass** der Kennwert (KEN) in einer Kennwertdatenbank (KDA) abgelegt wird.

10. Vorrichtung zur Erkennung eines heißgelaufenen Wälzlagers (WLA) zumindest eines in einem Achslager (AXL) drehbar gelagerten Rades (RAD) eines Schienenfahrzeuges **dadurch gekennzeichnet, dass** in dem Bereich des Achslagers (AXL) zumindest eines Rades (RAD) zumindest ein Beschleunigungssensor (BSE) angeordnet ist, der mit einer Auswerteeinheit (ASW) in Verbindung steht, die dazu eingerichtet ist, zumindest ein Beschleunigungssignal (BSI) von dem Beschleunigungssensor (BSE) zu empfangen und daraus einen Kennwert (KEN) zur Charakterisierung des thermischen Zustandes des Wälzlagers (WLA) zu ermitteln und mit einem Sollwert (SOL) zu vergleichen und bei Überschreiten einer vorgebbaren Abweichung des Kennwertes (KEN) von dem Sollwert (SOL) eine Hinweisnachricht zu erzeugen.

11. Vorrichtung nach Anspruch 10, **dadurch gekennzeichnet, dass** die Auswerteeinheit (ASW) dazu eingerichtet ist, eine Spektralverteilung des zumindest einen Beschleunigungssignals (BSI) zu berechnen.

12. Vorrichtung nach Anspruch 10 oder 11, **dadurch gekennzeichnet, dass** an der Achse (AXE) des zumindest einen Rades (RAD) ein Drehfrequenzsensor (DFS) angeordnet ist, der zumindest ein Drehfrequenzsignal (DSI) an die Auswerteeinheit (ASW) übermittelt, wobei die Auswerteeinheit (ASW) dazu eingerichtet ist, die Drehfrequenz ($v_{WELLE}$) der Achse (AXE) des Rades (RAD) aus dem Drehfrequenzsignal (DSI) zu ermitteln.

13. Vorrichtung nach einem der Ansprüche 10 bis 12, **dadurch gekennzeichnet, dass** die Auswerteeinheit (ASW) dazu eingerichtet ist, eine vorgebbare Anzahl von Innenringüberrollharmonischen (IRH) aus dem zumindest einem Beschleunigungssignal (BSI) zu berechnen.

14. Vorrichtung nach einem der Ansprüche 10 bis 13, **dadurch gekennzeichnet, dass** an den Achslagern (AXL) zumindest zweier Räder (RAD) je zumindest ein Beschleunigungssensor (BSE) angeordnet ist, der mit der Auswerteeinheit (ASW) in Verbindung steht, die dazu eingerichtet ist, zumindest ein Beschleunigungssignal (BSI) von dem Beschleunigungssensor (BSE) zu empfangen und daraus einen Kennwert (KEN) zur Charakterisierung des thermischen Zustandes des Wälzlagers (WLA) zu ermitteln, und die zumindest zwei Kennwerte (KEN) miteinander zu vergleichen.

15. Vorrichtung nach Anspruch 10, **dadurch gekennzeichnet, dass** die Auswerteeinheit (ASW) dazu eingerichtet ist, als Kennwert (KEN) den Crestfaktor (C) des zumindest einen Beschleunigungssignals (BSI) zu berechnen.

16. Vorrichtung nach Anspruch 10, **dadurch gekennzeichnet, dass** die Auswerteeinheit (ASW) dazu eingerichtet ist, als Kennwert (KEN) die Schiefe ($\gamma_1$) einer Wahrscheinlichkeitsdichtefunktion des Beschleunigungssignals (BSI) zu berechnen.

17. Vorrichtung nach Anspruch 10, **dadurch gekennzeichnet, dass** die Auswerteeinheit (ASW) dazu eingereichtet ist, als Kennwert (KEN) die Wölbung ($\gamma_2$) einer Wahrscheinlichkeitsdichtefunktion des Beschleunigungssignals (BSI) zu berechnen.

18. Vorrichtung nach einem der Ansprüche 10 bis 17, **dadurch gekennzeichnet, dass** eine Kennwertdatenbank (KDA) zur Speicherung des Kennwertes (KEN) vorgesehen ist.

19. Vorrichtung nach einem der Ansprüche 7 bis 12, **dadurch gekennzeichnet, dass** eine Ausgabeeinheit (AUS) zur Ausgabe der Alarmmeldung (ALA) vorgesehen ist, wobei die Ausgabeeinheit (AUS) dazu eingerichtet ist, die Alarmmeldung (ALA) in optischer und/oder akustischer Weise auszugeben.

Fig. 1

Fig. 2

A _____ IGH

Fig. 3a                                    ν

A _____ IGH

Fig. 3b                                    ν

```
              ┌───────┐
              │  BSE  │
              └───┬───┘
              BSI │
        ┌─────────┼──────────────────────────┐          ASW
        │         │                           │
        │     ┌───┴───┐                       │
        │     │  FFT  │                        │
        │     └───┬───┘                       │
        │         │                           │
        │     ┌───┴───┐                       │
        │     │  IGH  │                        │
        │     └───┬───┘                       │
        │         │                           │
 ┌──────┐   ┌────┴────┐        ┌───────┐      │
 │ KDA  ├───┤   KEN   │        │  SOL  │       │
 └──────┘   └────┬────┘        └───┬───┘      │
        │        │     ◇           │          │
        │      ╱ KEN -SOL < BET ╲──┘          │   ┌───────┐
        │      ╲                 ╱            │───┤  STR  │
        │        ◇───────────────             │   └───────┘
        │       ja │                          │   ┌───────┐
        │          └──── ALA ─────────────────┼───┤  AUS  │
        └──────────────────────────────────────┘  └───────┘
```

Fig. 4

Fig. 5

Fig. 6